Europäisches Patentamt

European Patent Office

Office européen des brevets

(19)

(11) Veröffentlichungsnummer: **0 349 825**

**A2**

(12) **EUROPÄISCHE PATENTANMELDUNG**

(21) Anmeldenummer: **89111190.8**

(51) Int. Cl.⁴: **G02B 7/18**

(22) Anmeldetag: **20.06.89**

(30) Priorität: **02.07.88 DE 8808506 U**

(43) Veröffentlichungstag der Anmeldung:
**10.01.90 Patentblatt 90/02**

(84) Benannte Vertragsstaaten:
**DE ES FR GB IT NL**

(71) Anmelder: **DORNIER GMBH**
**Postfach 1420**
**D-7990 Friedrichshafen 1(DE)**

(72) Erfinder: **Helwig, Günther, Dr.**
**Säntisblick 1**
**D-7758 Daisendorf(DE)**
Erfinder: **Sippel, Rudolf, Dipl.-Ing.**
**Am Neusatz 7**
**D-7778 Markdorf(DE)**
Erfinder: **Seuster, Walter, Ing.**
**Lindenstrasse 94**
**D-7990 Friedrichshafen(DE)**

(74) Vertreter: **Landsmann, Ralf, Dipl.-Ing.**
**DORNIER GMBH - Patentabteilung - Kleeweg**
**3**
**D-7990 Friedrichshafen 1(DE)**

(54) **Einrichtung zur entlasteten Lagerung von hochpräzisen Schwenkbaren Reflektoren oder Spiegeln für Teleskope.**

(57) Einrichtung zur entlasteten Lagerung von hochpräzisen schwenkbaren sphärischen oder asphärischen Schalen in einer Tragstruktur, beispielsweise Reflektoren oder Spiegeln für Teleskope.

**EP 0 349 825 A2**

# Einrichtung zur entlasteten Lagerung von hochpräzisen schwenkbaren Reflektoren oder Spiegeln für Teleskope

Die Neuerung betrifft eine Einrichtung zur entlasteten Lagerung von hochpräzisen schwenkbaren sphärischen oder asphärischen Schalen in einer Tragstruktur, beispielsweise Reflektoren oder Spiegeln für Teleskope. Der Durchmesser solcher Teleskope liegt im Meterbereich. Die Teleskope sind in der Regel ortsfest und dienen der astronomischen Beobachtung. Zu diesem Zweck können sie auch in Grossraumflugzeugen installiert sein.

Üblicherweise sind die Schalen an ihrer Rückseite mittels über die Kreisfläche verteilt angeordneter Schwingen gelagert. Diese Art der Lagerung führt zu Verformungen im Bereich der Unterstützungspunkte. Für den Anwendungsfall sollte die Abweichung von der geometrisch exakten Form kleiner sein als 0,1 μm.

Der Neuerung liegt die Aufgabe zugrunde, eine Lagerung für hochpräzise Spiegel oder Reflektoren zu schaffen, die Verformungen, hervorgerufen durch das Eigengewicht des Spiegels, kompensiert und in jeder Winkellage wirksam ist.

Diese Aufgabe wird neuerungsgemäss gelöst durch mehrere, am Mantel der Schale verteilt angeordnete Paralellogramm-Getriebe, die eine Stützkraft auf den Rand der Schale ausüben. Dabei liegen in vorteilhafter Weise die Krafteinleitungspunkte der Parallelogrammgetriebe ebenso wie die drei Fixierlagerpunkte in der Schale in einer Ebene, die durch den Schwerpunkt der Schale verläuft. Die Hebelgetriebe und Fixierlager behindern eine Wärmedehnung der Schale nicht.

Weitere Vorteile der Neuerung sind Gegenstand von Unteransprüchen.

Die Neuerung wird nachfolgend anhand von Figuren näher erläutert.

Es zeigen:

Fig. 1 eine kreisrunde Spiegelstruktur aus Faserverbundwerkstoff in Schnittdarstellung,

Fig. 2 eine erfindungsgemässe Lagerung eines Spiegels in Draufsicht,

Fig. 3 die Lagerung von Fig. 2 in Schnittdarstellung,

Fig. 4 die Ansicht eines erfindungsgemässen Entlastungsgetriebes,

Fig. 5 bis 9 weitere Ausführungsbeispiele von Spiegellagerungen in Draufsicht und Schnittdarstellung.

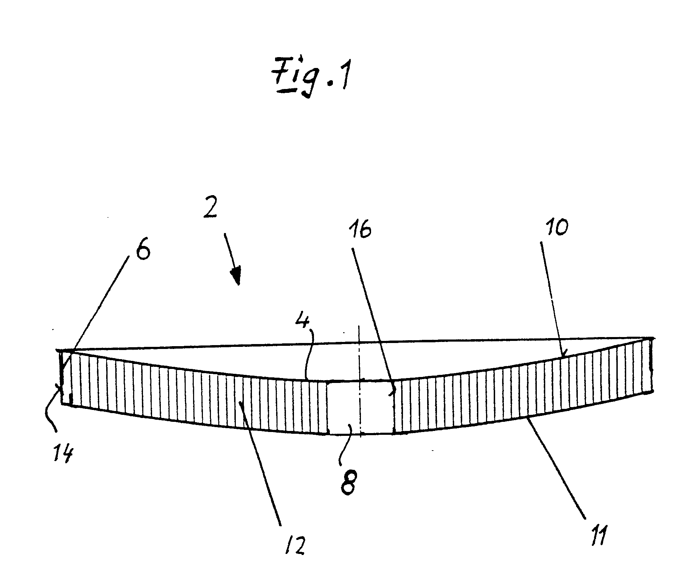

In Fig. 1 ist ein Spiegel 2 aus Faserverbundwerkstoff dargestellt. Der Spiegel ist eine gewölbte Schale 4 mit einer kreisrunden Berandung 6 und einer Öffnung 8 in der Schalenmitte. Der Durchmesser des Spiegels kann mehrere Meter betragen. Die Struktur besteht im wesentlichen aus folgenden Faserverbund-Bauteilen: Vordere Deckschicht 10, hintere Deckschicht 11, Wabenkern 12, äusserer Mantelring 14 und innerer Mantelring 16. Die Bauteile sind miteinander durch Klebung verbunden.

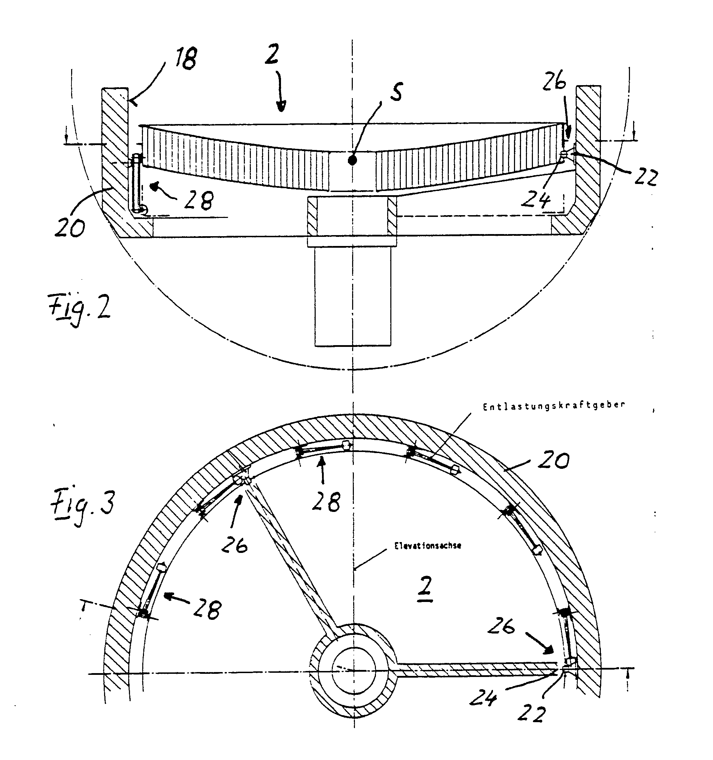

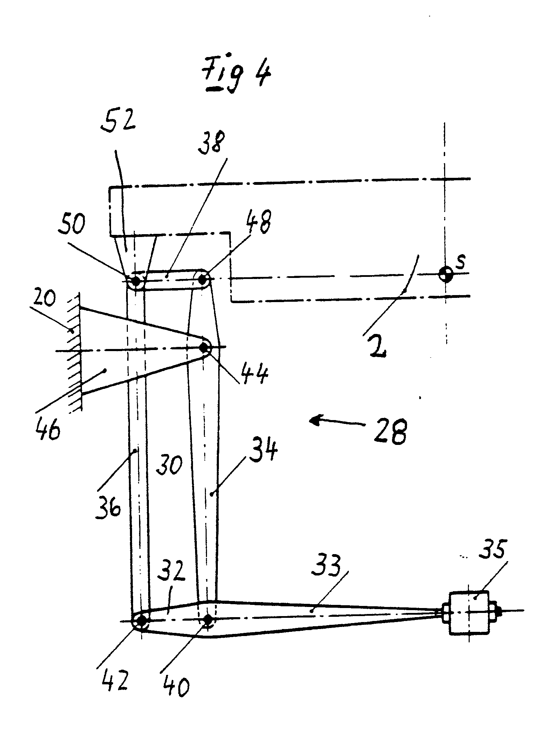

Fig. 2 und 3 zeigen die Lagerung des Spiegels 2 in der Bohrung 18 eines Tragrings 20. Die Fixierlagerung 26 besteht aus drei Zapfen 22, die in Buchsen 24 eingreifen. Diese Lager 26 sind im Abstand von 120 Winkelgraden über den Umfang des Spiegels 2 und Tragrings 20 verteilt, so dass in Fig. 3, die nur die eine Hälfte eines Spiegels und Tragrings zeigt, zwei Lagerungen 26 zu sehen sind. Die Lagerungen 26 bilden eine statisch bestimmte 3-Ppunktlagerung in deren Ebene der Schwerpunkt S des Spiegels liegt. An jedem Lager 26 können äussere Kräfte in axialer Richtung und in Umfangsrichtung des Spiegels übertragen werden.

Konstruktiv können die Lager 26 als spielfreie Radial-Loslager, z. B. in Membranbauart ausgeführt sein, dies ist in den Fig. nicht gezeigt.

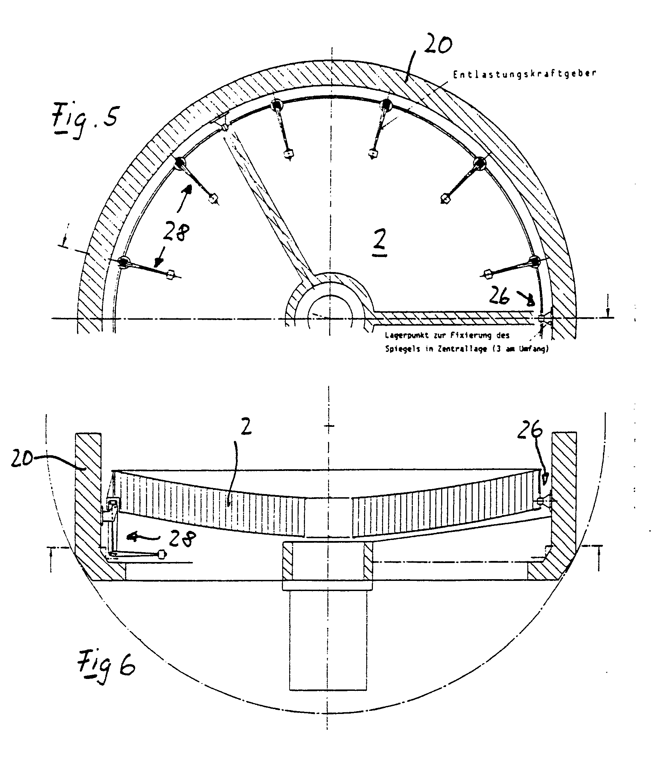

Fig. 2 und 3 zeigen über den Umfang des Spiegels 2 verteilt mehrere Entlastungslager 28, von denen eines vergrössert in Fig. 4 und 9 dargestellt ist. Das Lager ist ein Parallelogrammgetriebe 30 mit den Hebeln 32, 34 und den Lenkern 36, 38. An einem über das Parallelogramm hinausragenden Ende 33 trägt der Hebel 32 ein Ausgleichsgewicht 35. Hebel 32 ist bei 40 gelenkig mit dem Hebel 34 und bei 42 mit dem Lenker 36 verbunden. Der Hebel 34 ist bei 44 an einen Lagerbock 46 angelenkt, der mit dem Mantelring 20 fest verbunden ist. Das Ende des Hebels 34 ist bei 48 an den Lenker 38 angelenkt, der zusammen mit Lenker 36 bei 50 den Spiegel 2 mittels eines Lagerbocks 52 lagert.

Mittels des Paralellogrammgetriebes 30, bestehend aus Hebel 32 und dem Lenker 38, die die kurzen Seiten des Parallelogrammgetriebes bilden, wird die vom Ausgleichsgewicht 35 ausgehende Kraft im Lager 50 so übersetzt, dass eine vorher berechnete Entlastungskraft im Lager 50 angreift und mit der in diesem Punkt wirkenden Gewichtskraft des Spiegels 2 im Gleichgewicht steht. In der gezeigten horizontalen Lage des Spiegels 2 wird mittels Lenker 36 eine vertikale Entlastungskraft beim Gelenk 50 in den Spiegel 2 eingeleitet.

Nimmt der Spiegel 2 eine geneigte Lage ein, so ergibt sich die Entlastungskraft durch vektorielle Addition der von den Lenkern 36 und 38 übertragenen Kräfte. Bei vertikaler Lage des Spiegels 2 wird eine vertikale Zugkraft oder Druckkraft vom Lenker 38 auf das Gelenk 50 übertragen. Wie aus den Fig. 3, 5 und 7 hervorgeht, sind mehrere Entlastungslager 28 über den Umfang des Spiegels 2 verteilt angeordnet, wobei sämtliche Gelenke 50 zusammen mit dem Schwerpunkt S des Spiegels eine Ebene bilden. Die aus der Summe der Entlastungskräfte der Entlastungskraftgeber 28 in den Gelenken 50 resultierende Gesamtkraft ist in allen Winkellagen des Spiegels gleich seiner Gewichtskraft, so dass die Lagerungen 26 vollständig entlastet werden und sich nahezu eine "schwimmende Lagerung" des Spiegels 2 ergibt, wodurch die Verformungen des Spiegels sehr klein bleiben und auf eine Randzone beschränkt werden.

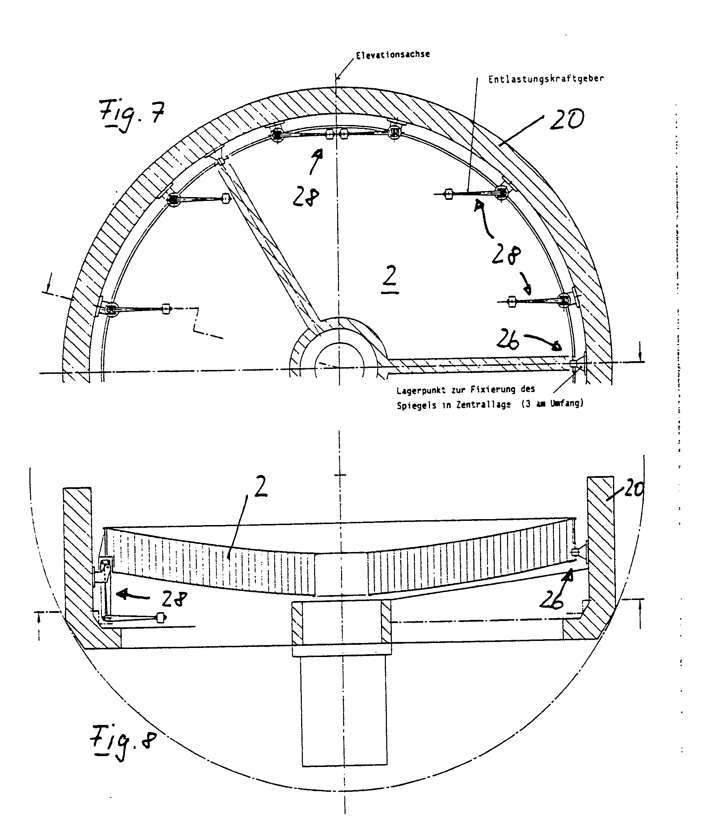

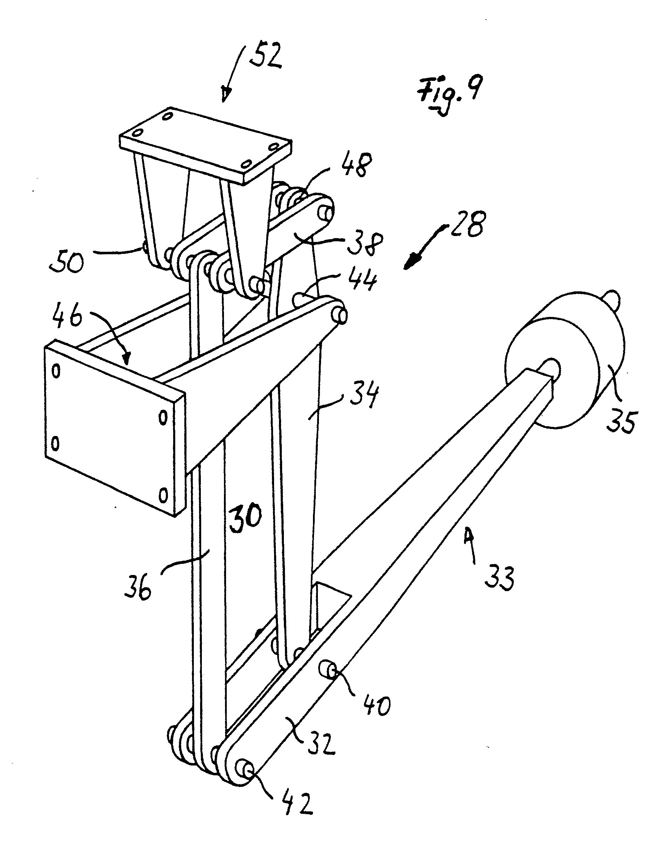

In Fig. 2 und 3 ist eine Lagerung des Spiegels 2 mit tangential angeordneten Entlastungslagern 28 dargestellt. Fig. 5 und 6 zeigen eine radiale Anordnung der Entlastungslager 28. In beiden Fällen muss das Übersetzungsverhältnis von Hebel 34 doppelt so gross sein, wie das von Hebel 32.

In Fig. 7 und 8 ist eine Variante mit parallel angeordneten Lagern 28 gezeichnet. Dabei sind die Übersetzungsverhältnisse der Hebel 32 und 34 gleich.

## Ansprüche

1. Einrichtung zur entlasteten Lagerung von hochpräzisen schwenkbaren sphärischen oder asphärischen Schalen in einer Tragstruktur, beispielsweise Reflektoren oder Spiegeln für Teleskope, dadurch gekennzeichnet, dass über den Umfang des Spiegels (2) verteilt mehrere als Parallelogrammgetriebe (30) ausgebildete Entlastungslager (28) vorhanden sind, die aus jeweils zwei Hebeln (32, 34) und zwei Lenkern (36, 38) bestehen, wobei die Lenker (36, 38) über ein Gelenk (50) mit dem Spiegel (2) in der Ebene des Schwerpunkts S des Spiegels verbunden sind und über einen an einem Hebel (34) des Parallelogramms angreifendes Lager (44) mit dem Tragring (20) verbunden sind und Hebel (32) an dem freien Ende (33) ein Ausgleichsgewicht (35) aufweist.

2. Einrichtung nach Anspruch 1, dadurch gekennzeichnet, dass die Parallelogrammgetriebe (30) tangential, radial oder zueinander parallel am Umfang des Spiegels (2) angeordnet sind.

3. Einrichtung nach Anspruch 2, dadurch gekennzeichnet, dass die Summe der durch die Ausgleichsgewichte (35) in den Lagern (50) aufgebrachten Kräfte gleich dem Gewicht des Spiegels (2) ist.

4. Einrichtung nach Ansprüchen 1 - 3, dadurch gekennzeichnet, dass das Übersetzungsverhältnis von Hebel (34) doppelt so gross ist, wie das von Hebel (32).

5. Einrichtung nach Ansprüchen 1 - 3, dadurch gekennzeichnet, dass das Übersetzungsverhältnis der Hebel (32) und (34) gleich ist.

6. Einrichtung nach Ansprüchen 1 - 3, dadurch gekennzeichnet, dass drei am Umfang des Spiegels (2) gleichmässig verteilte Fixierlagerungen (26) angeordnet sind, die den Spiegel (2) in allen Stellungen genau positionieren.

Fig.1

Fig. 2

Fig. 3

Entlastungskraftgeber

Elevationsachse

2

Fig 4

Fig. 5

20
Entlastungskraftgeber
28
2
26
Lagerpunkt zur Fixierung des
Spiegels in Zentrallage (3 am Umfang)

Fig 6

20
2
26
28

Fig. 7

Elevationsachse

Entlastungskraftgeber

20

28

28

2

28

26

1

Lagerpunkt zur Fixierung des
Spiegels in Zentrallage (3 am Umfang)

20

2

28

26

Fig. 8

Fig.9